# EUROPEAN PATENT APPLICATION

(11) **EP 1 220 544 A1**
(43) Date of publication of application: **03.07.2002**
(21) Application number: 01310311.4
(22) Date of filing: 10.12.2001
(51) Int. Cl.: H04N 7/173, H04N 7/16, H04N 7/167, G06F 17/60

(54) **Content program distribution and returning system, management apparatus, rental terminal, returning terminal and content programs rental method**

(30) Priority: 27.12.2000 JP 2000396581
(71) Applicant: SHARP KABUSHIKI KAISHA, Osaka 545-8522 (JP)
(72) Inventor: Takano, Toshiteru, Yamatokoriyama-shi, Nara (JP)
(74) Representative: Brown, Kenneth Richard

(57) **Abstract**

When a card (150) is inserted to a kiosk returning terminal (110), management information of the card (150) is transmitted to an electronic content programs distributing and returning server (101). The electronic content programs distributing and returning server (101) determines whether the card (150) contains a rented content program. When it contains a rented content program, the electronic content programs distributing and returning server (101) obtains information including user name, rented program title and the like for the card (150), calculates usage period and additional fee, and transmits the result of calculation to the kiosk returning terminal (110). This enables payment of the additional fee at the kiosk returning terminal (110).

## Description

### BACKGROUND OF THE INVENTION

### Field of the Invention

The present invention relates to content programs distribution and returning system as well as content programs rental method. More specifically, the present invention relates to content programs distribution and returning system as well as content programs rental method that allows charging in accordance with usage time period.

### Description of the Background Art

Rental services renting recorded package media including video tapes, CDs (compact discs) and the like have been known. The media are rented and returned at one same rental store providing the rental service no matter whether inside or outside the business hours of the store. A rental store hands out leaflet occasionally within the store, and displays information of recommended content programs, new releases, reviews and the like, so that a user renting a medium can refer to such leaflets, displays and package media within the store, to make easier selection of content programs of his/her preference next time.

Recently, a service allowing title search of movies preferred by a user using a key word on a network such as the Internet and rental service using a communication medium have been proposed. In the rental method of content programs through a communication medium, a procedure for returning is implemented by some method or other in an electronic system, and (1) actual use of an electronic content program is calculated and rental fee in accordance with the actual use is charged, or (2) a usage time period designated and limited in advance is managed and rental fee is charged in accordance with the designated usage time period, as proposed in International Patent Application PCT/US90/02209 (WO90/13865) or Japanese Patent Laying-Open No. 2000-242699.

The prior art (1) relates to a system including the following first and second computers or to the first computer. The first computer is arranged at a host station transferring and managing a program to be used by a user. The second computer is arranged on the user side, and receives and stores the program transmitted from the host station and converts (decodes the program transmitted in an encrypted state) to a form usable by the second computer. As an application of the technique, it is proposed that as a management of computer the second computer monitors usage time period of the first computer as a software use management, and rental fee of computer software usage is calculated, so as to enable calculation and charging of the rental fee based on the actual usage time period of the computer software.

Prior art (2) relates to a method of performing content programs providing process, a process for requesting setting of an inner timer of a player, management of a user suspected of unauthorized use, and management-control of date and time of content programs provision both on the side of content programs provider apparatus and on the side of the player. According to this technique, the player side checks the rental due date of the content program requested at the time of renting the content program, and display of a list of content programs, reproduction and expiration process (erasure) and the like are performed.

In the conventional system of rental stores renting package media, it is necessary for a user to go out to the rental store to return the package. It is not always possible or convenient for the user to go to the rental store within the rental time period. Therefore, it is often the case that the user must pay extended viewing fee at the time of return. Though the system is advantageous for the content programs provider as the extended viewing fee can be collected, the system is inadvantageous for users who must extend the rental period as he/she cannot go to the store from an unavoidable circumstances.

When a rental system of electronic content programs is realized, it is possible that the service is provided through a rental store connected by a communication medium to a distribution center distributing content programs. In that case, the necessity for the user to rent and return from and to only one store will decrease. It is noted, however, that even a large scale franchise rental provider has limited number of stores. Therefore, when content programs rental and returning must be done only at the actual rental stores, there still remains the problem that the user must extend the rental period undesirably, as it is not always the case that the franchise rental store exists at a convenient location and can be visited at a convenient time for the user.

Problems encountered in realizing the electronic content programs rental system includes "return of the rented content programs" and "charging of rental fee". More specifically, in a method in which the computer arranged on the host station providing content programs monitors a user computer after the end of rental procedure and collecting rental fee in accordance with the usage time period of the user, such an abuse cannot be prevented that the time of usage of the content programs is not changed permanently from the date and time of renting, so as to use continuously, as clocks of the user computer can be changed by the user. This is inadvantageous for the content programs provider.

Accordingly, another method is considered in which computers of both the content programs provider apparatus and the user player have the date and time managed and controlled, and the content program of which usage period expired is erased from the player side computer, so as to prevent use after pre-designated rental period. This method still has a problem for a user who wishes to extend the initially set period owing to circumstances.

User's satisfaction will be ensured when it is possible for the user to easily search for a content program of his/her preference and to rent the desired content program at a desired time. In the conventional system of package media rental stores, no matter whether at actual stores or on the Internet search, it has been difficult to find a preferred content program from displays or from the search engine that are designed for various and wide ranges of customers. Even when the user finally selects a content program for rental, there is still a problem that the desired content program package is not in the store or the package has been already rented out.

When a user returns the package outside business hours, it is difficult to look for the content programs at the store and there is smaller chance of next rental of the package. For a user who is not well aware of his/her preference of content programs or a user who feels difficult to search for a content program of his/her preference among wide variety of titles and to select a desired content program, even the electronic content programs rental system does not encourage rental of the next content program.

### SUMMARY OF THE INVENTION

An object of the present invention is to provide a content programs distribution and returning system and content programs rental method that allows a user to return a rented content program at a nearest location at a convenient time, and allows charging of rental fees in accordance with the usage time period to the user.

Another object of the present invention is to provide a content programs distribution and returning system and a content programs rental method that encourages a user who rented a content program to rent a content program of his/her preference next time.

According to an aspect, the present invention provides a content programs distributing and returning system, including: a first terminal executing rental of a content program; a second terminal that can be installed space from the first terminal; and a management apparatus connected to the first and second terminals through a network. The first terminal executes rental of the content program by storing the content program in a prescribed memory, the second terminal executes a process for disabling reading of the content program stored in the prescribed memory; and the management apparatus determines charge amount for the rental of the content program based on a time period from storage of the content program by the first terminal in the prescribed memory until the second terminal executes the process for disabling reading of the content program in the prescribed memory, and controls the second terminal such that payment is made in accordance with the determined charge amount when the second terminal disables reading of the content program.

According to an aspect of the present invention, it is possible for the user to return the content program at a second terminal positioned apart from the first terminal. Further, the charge amount of rental is determined by the management apparatus in accordance with the period from storage of the content program in a prescribed memory until reading of the content program from the prescribed memory is disabled.

Accordingly, it is possible for the user to easily return the content program, and therefore, it is easier to avoid payment of undesired extended viewing fee (fee charged in accordance with the time of delay from the return due date and time agreed at the time of rental). On the other hand, similar to the conventional system of package media rental stores, it is possible to read the content program up to the time of returning, provided that the extended viewing fee is paid at the time of return. Further, charge amount for rental is determined by the management apparatus, using time points at which processes by the first and second apparatuses are performed as references. Therefore, it is needless to worry about such abuse that clock of the user side computer has its setting changed in bad faith and the content program is used for a long period of time.

Preferably, in the content programs distribution and returning system of the present invention, when executing the process for disabling reading of the stored content program in the prescribed memory, the second terminal stores information of recommended content programs to the prescribed memory.

Further, preferably, in the content programs distribution and returning system of the present invention, the first terminal displays an image allowing selection of a content program for rental, and stores a content program selected based on the image displayed for selection in the prescribed memory; and contents of the image allowing selection of a content program for rental is determined based on the information of recommended content programs stored in the prescribed memory.

Accordingly, it becomes possible for the user to browse information of recommended content programs (hereinafter also referred to as recommendation information) by a portable viewing terminal, for example, and to select a content program for rental based on recommendation information stored in the memory. Thus, it is advantageous to encourage the user to rent further content programs.

In the content programs distribution and returning system of the present invention, preferably, the first terminal stores the content program and a key necessary for reading the content program simultaneously in the prescribed memory; and the second terminal executes the process for disabling reading of the content program stored in the prescribed memory by destroying the key.

Accordingly, an operation to disable reading of a content program from the memory can be done in a short time period in a simple manner. Therefore, it is possible to return the content program without imposing a burden on the second terminal.

Preferably, in the content programs distribution and returning system of the present invention, the management apparatus transmits a content program to the first terminal; and the first terminal stores the content program received from the management apparatus in the prescribed memory.

Further, in the content programs distribution and returning system of the present invention, preferably, when executing the process for disabling reading of the content program stored in the prescribed memory, the second terminal executes a process for accepting rental reservation from a user, and transmits information of the accepted reservation to the management apparatus; and the management apparatus adds a reward point to the user whose rental reservation is accepted by the second terminal, for the rental reservation.

Thus, it becomes possible to provide various services using reward points earned by the user, and to promote package media rental. Thus, it becomes possible to encourage the user to rent content programs and package media.

Further, in the content programs distribution and returning system of the present invention, preferably, when executing the process for disabling reading of the content program, the second terminal accepts input of a rating by a user for the content program of which reading is to be disabled, and transmits the rating to the management apparatus; and the management apparatus adds a reward point to the user for the input of rating.

Thus, ratings for the content programs can be accumulated, and therefore it becomes possible to provide assortment of titles that is more popular among the users.

According to another aspect, the present invention provides a content program distributing and returning system, including: a first terminal executing rental of a content program; a second terminal that can be installed apart from the first terminal; and a management apparatus connected to the first and second terminals through a network. The first terminal executes rental of the content program by storing the content program in a prescribed memory; and the second terminal executes a process for disabling reading of the content program stored in the prescribed memory, and stores information of recommended content programs in the prescribed memory when executing the process.

According to this aspect, it is possible for the user to return the content at the second terminal positioned apart from the first terminal. Further, it is possible for the user to browse the recommendation information using a portable viewing terminal or the like.

Accordingly, it is possible for the user to return the content easily, and therefore, to avoid undesirable payment of extended viewing fee (fee charged in accordance with the time of delay from the return due date and time agreed at the time of rental). Further, it is possible to encourage the user to rent further content programs.

According to a further aspect, the present invention provides a management apparatus connected to a first terminal executing rental of a content program and a second terminal that can be installed apart from the first terminal, through a network, in which the management apparatus determines charge amount for the rental of the content program based on a time period from storage of the content program by the first terminal in the prescribed memory until the second terminal executes the process for disabling reading of the content program in the prescribed memory, and controls the second terminal such that payment is made in accordance with the determined charge amount when the second terminal disables reading of said content program.

According to a still further aspect, the present invention provides a rental terminal executing rental of a content program, storing a content program in a prescribed memory, connected through a network to a returning terminal that disables reading of the content program in the prescribed memory, and further connected through a network to a management apparatus that determines charge amount of the rental of the content program based on a period from storage of the content program in the prescribed memory by the rental terminal until the returning terminal executes the process for disabling reading of the content program in the prescribed memory, and controls the returning terminal such that payment is made in accordance with the charge amount determined when reading of the content program is disabled.

According to a still further aspect, the present invention provides a returning terminal that can be installed apart from a rental terminal, disabling reading of a content program in a prescribed memory stored by the rental terminal, connected through a network to the rental terminal, and further connected through a network to a management apparatus that determines charge amount of the rental of the content program based on a period from storage of the content program in the prescribed memory by the rental terminal until the returning terminal executes the process for disabling reading of the content program in the prescribed memory, and controls the returning terminal such that payment is made in accordance with the charge amount determined when reading of the content program is disabled.

According to a still further aspect, the present invention provides a content programs rental method including the steps of: storing a content program in a prescribed memory by a first terminal to execute rental of the content program; disabling reading of the content program stored in the prescribed memory by a second terminal that can be installed apart from the first terminal; determining charge amount of the rental of the content program, by a management apparatus connected to the first and second terminals through a network, based on a period from storage of the content program in the prescribed memory by the first terminal until reading of the content program in the prescribed memory is disabled by the second terminal; and controlling the second terminal so that payment is made in accordance with the determined charge amount when the second terminal disables reading of the content program.

According to further aspects of the present invention, it is possible for the user to return the content at a second terminal positioned apart from the first terminal. Further, charge amount is determined by the management apparatus based on the time period from storage of the content in a prescribed memory until reading from the prescribed memory is disabled.

Accordingly, it is possible for the user to easily return the content program, and therefore, it is easier to avoid payment of undesired extended viewing fee (fee charged in accordance with the time of delay from the return due date and time agreed at the time of rental). On the other hand, similar to the conventional system of package media rental stores, it is possible to read the content program up to the time of returning, provided that the extended viewing fee is paid at the time of return. Further, charge amount for rental is determined by the management apparatus, using time points at which processes by the first and second apparatuses are performed as references. Therefore, it is needless to worry about such abuse that clock of the user side computer has its setting changed in bad faith and the content program is used for a long period of time.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing configuration of content programs distribution and returning system in accordance with an embodiment, realizing the content programs rental method of the present invention.

Fig. 2 is a functional block diagram representing a configuration of a kiosk returning terminal.

Fig. 3 is a functional block diagram showing a configuration of a rental store high speed recording apparatus.

Fig. 4 is a functional block diagram showing a configuration of an electronic content programs distributing and returning center server.

Fig. 5 is a functional block diagram representing a configuration of a kiosk management server.

Fig. 6 is a functional block diagram representing a configuration of a portable viewing terminal.

Fig. 7 is a flow chart representing operation control of a kiosk returning terminal.

Figs. 8A and 8B are flow charts representing operation control of the electronic content programs distributing and returning center server.

Fig. 9 is a flow chart representing operation control of the rental store high speed recording apparatus.

Fig. 10 is a flow chart representing an operation control of the portable viewing terminal.

Fig. 11 is a functional block diagram showing a card configuration.

Figs. 12A to 12C represent data configuration of package media rental information.

Fig. 13 shows data configuration of user information.

Fig. 14 shows data configuration of content programs information.

### DESCRIPTION OF THE PREFERRED EMBODIMENTS

Embodiment of the present invention will be described in detail with reference to the figures in the following.

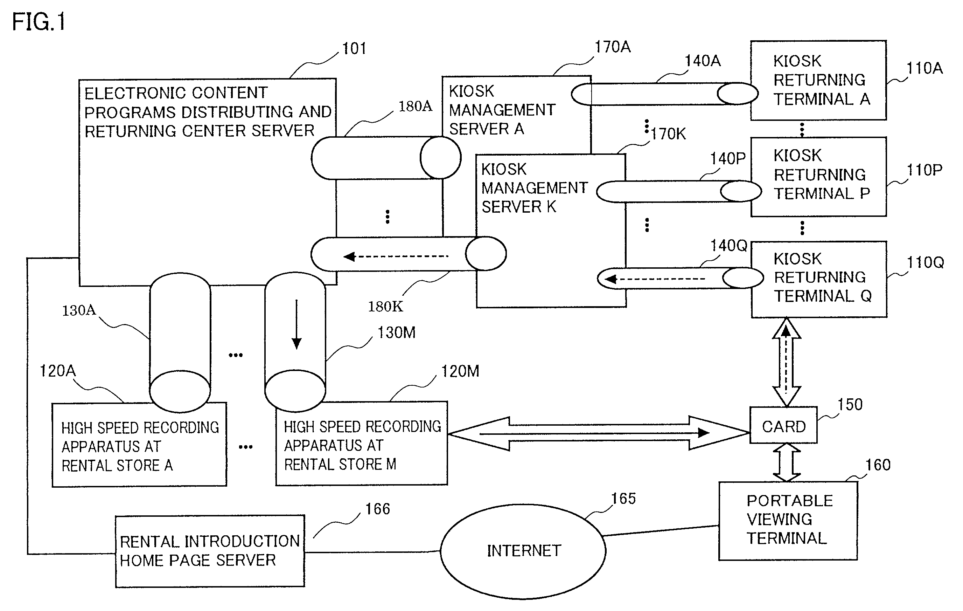

The system shown in Fig. 1 includes an electronic content programs distributing and returning center server 101 (content programs management center), rental store high speed recording apparatuses 120A to 120M (rental executing terminals), kiosk returning terminals (110A to 110P, 110Q (kiosk terminals), kiosk management servers (170A to 170K), a card 150 as a recording medium, and a portable viewing terminal (160). Distribution/supply of content programs is possible by communication network or insertion/removal of a card. Further, it is possible to confirm a list of titles that can be rented by a portable viewing terminal 160 through the Internet (165) from a rental introduction home page server 166.

Electronic content programs distributing and returning center server 101 incorporates a program for distributing and returning electronic content programs on a server computer, connected to communication networks 130A, ..., 130M capable of high speed transmission, and allows distribution of video content programs and the like to high speed recording apparatuses 120A to 120M of rental stores. Further, the server is connected through communication networks 180A, ..., 180K to kiosk management servers 170A, ..., 170K, and from the kiosk management servers 170A to 170K, further connected through low speed communication networks 140A, ..., 140P, 140Q to returning apparatuses 110A, ..., 110P, 110Q that are kiosk terminals (hereinafter referred to as kiosk returning terminals). Through these paths, information at the time of returning is exchanged with the kiosk returning terminals (110A to 110Q), instruction/confirmation of erasing content programs is performed, and elements such as general information of recommended content programs/new release information and the like can be distributed in advance to kiosk returning terminals 110A to 110Q.

A content program can be rented at high speed recording terminals 120A to 120M at rental stores, as a user, who is a registered member, inserts a card 150 and makes a designation. When a charging process and a payment process are authorized, the content program designated by the user is supplied from content programs distributing and returning center server 101 and written to card 150 inserted by the user, or when the content program is stored in the high speed recording terminal itself, the content program is directly written to the card. At the same time, management information such as rental due date is written. The high speed recording terminal may also exchange returning information with electronic content programs distributing and returning center server 101, confirm/receive instruction of erasing a content program, and receive and store in advance elements such as general information of recommended content programs/new releases.

After the end of renting operation, the user pulls out the card 150 and inserts the card to his/her portable viewing terminal 160, so that he/she can view the content program.

After viewing the content, the user may return the content program through the high speed recording apparatuses 120A to 120M of rental stores or kiosk returning terminals 110A to 110Q. For example, when the card 150 is inserted to any of the kiosk returning terminals 110A to 110Q, payment process is performed. At this time, when the due date has been passed, an additional fee is charged. Therefore, the user performs card payment adjustment process with the electronic content programs distributing and returning center server through any of the kiosk returning terminals 110A to 110Q. The content program in the card 150 is considered "returned" when management information in card 150 is overwritten by any of the kiosk returning terminals 110A to 110Q so as to disable viewing. Details of the "returning" operation will be described together with the function of card 150 later.

Thereafter, kiosk returning terminals 110A to 110Q record recommendation information (trailers of newly released vide programs, introduction data of titles related to the returned content program and so on) on the card 150. As this record is overwritten on the recording area on which the information of the just returned content program has been recorded, unauthorized reading by counterfeit management information corresponding to the returned content program is prevented simultaneously by this recording operation.

The above described operations are similarly performed by the high speed recording apparatuses 120A to 120M at rental stores.

When the user takes out the card 150 by which returning is complete and inserts the card to portable viewing terminal 160, he/she can view the recorded recommendation information.

When the user selects a preferable title from the recommendation information and designates the title for next rental (add recommendation mark: described later), the portable viewing terminal 160 decodes and holds the data in the card 150.

When the user goes to a rental store with the card 150 and inserts the card to the high speed recording apparatus 120A to 120M at the rental store, the information recorded in the card 150 is read, designation of the next rental that has been made previously is displayed on the high speed recording apparatuses 120A to 120M of the rental store, and after user's confirmation, the title is rented.

It is possible to use the communication function of the portable viewing terminal 160 to connect to the Internet 165 and view a rental introduction home page in a rental introduction home page server 166. When the user selects a desired title for rental from the viewed home page and downloads information thereof to the card 150, data is written in the same format as designation of the next rental described above. Therefore, when the user inserts the card 150 to any of the high speed recording apparatuses 120A to 120M at a rental store, information of the designated next rental is displayed on the apparatus, in the similar manner as described above.

In this manner, it is possible for the user to rent a title designated in advance without using a search list of the high speed recording apparatuses 120A to 120M at the rental store. Therefore, the time for selecting a title at the rental store can be made short for the user, and the rate of turn over improves at the rental store, which leads to increased number of rentals.

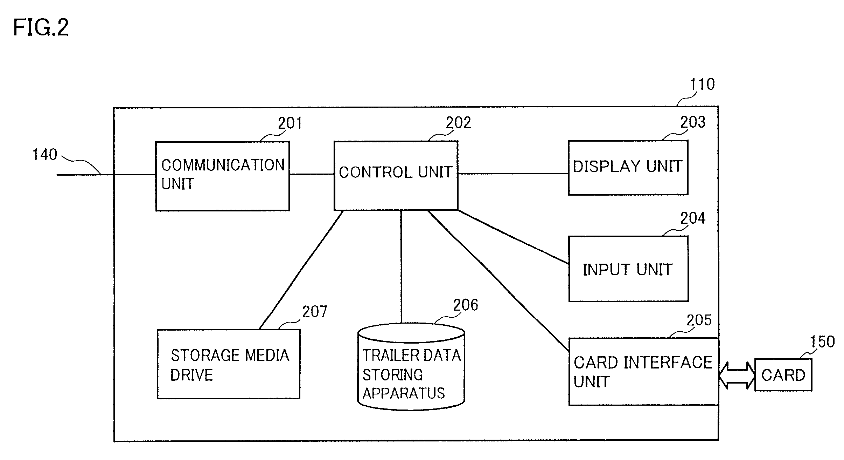

Next, the configuration of kiosk returning terminals 110A to 110Q will be described with reference to Fig. 2.

A kiosk returning terminal 110 (the terminal 110 generally represents terminals 110A to 110Q) includes: a communication unit 201 including a network circuit, a modem IC (Integrated Circuit) or the like; a control unit 202 including a CPU (Central Processing Unit), an ROM (Read Only Memory), an RAM (Random Access Memory), a hard disc and the like storing a control unit program, an operation condition data and so on, for controlling the overall apparatus; a display unit 203 including an LCD (Liquid Crystal Display), a back light and a controller for displaying information for the user; an input unit 204 including a touch panel, a key switch or the like; a card interface unit 205 including a card connector to which the card 150 is inserted, a card insertion/removal detecting circuit, an IC controlling reading/writing of information from and to the card 150; a trailer data storing apparatus 206 implemented by a hard disc and storing recommendation data such as trailers; and a storage media drive 207 including a DVD (Digital Versatile Disc) driver or the like, for exchanging trailer data, control unit program and operation condition data.

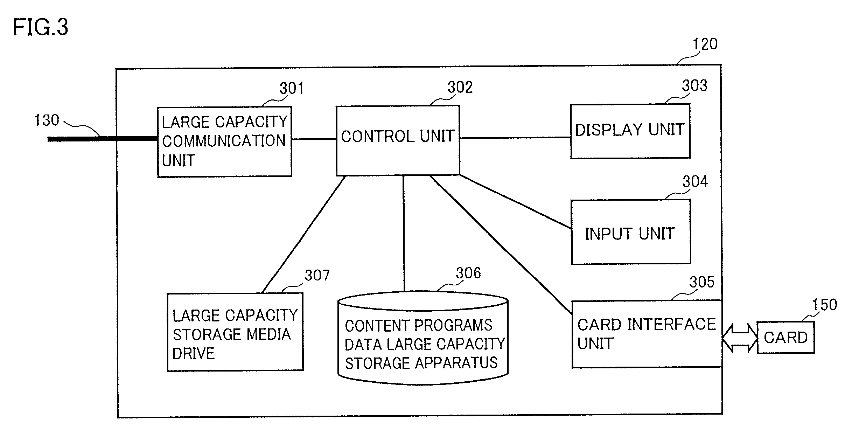

The configuration of the high speed recording apparatuses 120A to 120M at rental stores will be described with reference to Fig. 3.

The high speed recording apparatus 120 (generally representing apparatuses 120A to 120M) at the rental store includes: a large capacity communication unit 301 including a fiber optic communication circuit or the like; a control unit 302 including a CPU, an ROM, an RAM, a hard disc and the like storing control unit program and operation condition data; a display unit 303 including an LCD, a backlight and a controller for displaying information for the user; an input unit 304 including a touch panel, a key switch or the like; a card interface unit 305 including a card connector to which the card is inserted or a card insertion/removal detecting circuit, and an IC controlling reading/writing of information from and to the card; a large capacity storing apparatus 306 implemented by a hard disc for storing content programs data; and a media drive 307 including a DVD drive or the like for off-line supply/exchange of content programs data, control unit program and the operation condition data.

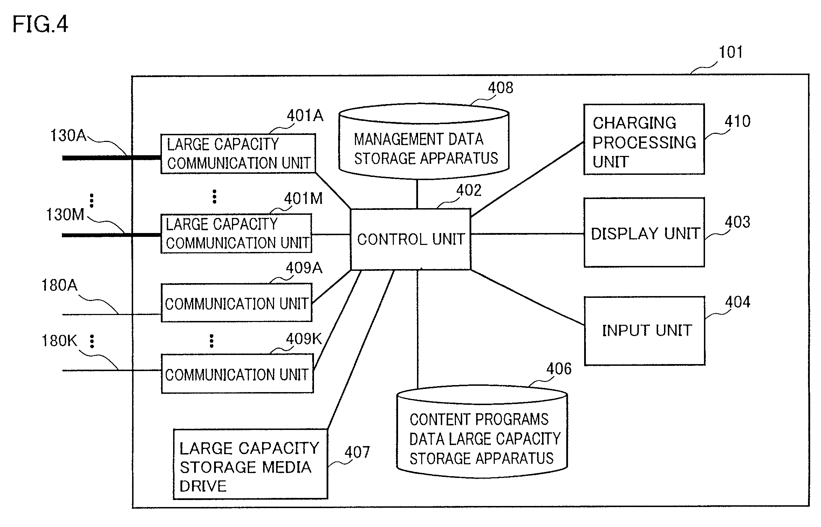

Next, the configuration of the electronic content programs distributing and returning center server 101 will be described with reference to Fig. 4.

Electronic content programs distributing and returning center server 101 includes: large capacity communication units 401A, ..., 401M including fiber optic communication circuit or the like; communication units 409A, ..., 409K including a network circuit, a modem IC or the like; a control unit 402 including a CPU, an ROM, an RAM, a hard disc and the like storing control unit program and operation condition data for controlling the overall apparatus; a display unit 403 including an LCD, a back light and a controller for displaying information to an administrator; an input unit 404 including a touch panel, a key switch or the like; a large capacity storing apparatus 406 implemented by a hard disc and storing content programs data; a large capacity storing media drive 407 implemented by a DVD drive for off-line supply/exchange of content programs data, control unit program and operation condition data; a management data storing apparatus 408 implemented by a hard disc and storing user information, content programs information, package media rental information and the like; and a charging processing unit 410 processing and authorizing charging information.

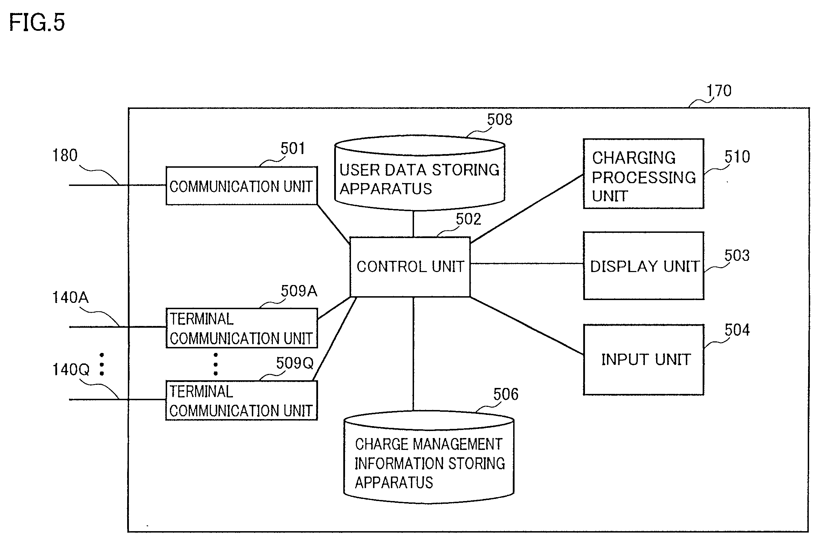

Next, the configuration of the kiosk management servers 170A to 170K will be described with reference to Fig. 5.

Kiosk management server 170 (generally representing servers 170A to 170K) includes: a communication unit 501 including a network circuit, a modem IC or the like; a terminal communication units 509A, ... 509Q; a control unit 502 including a CPU, an ROM, an RAM, a hard disc and the like storing control unit program and operation condition data; a display unit 503 including an LCD, a back light and a controller for displaying information for an administrator; an input unit 504 including a touch panel, a key switch or the like; a charge management information storing apparatus implemented by a hard disc and storing charge management information; a user data storing apparatus 508 implemented by a hard disc and storing data of users who are allowed to pay at kiosks; and a charging processing unit 510 for processing and authorizing charging information.

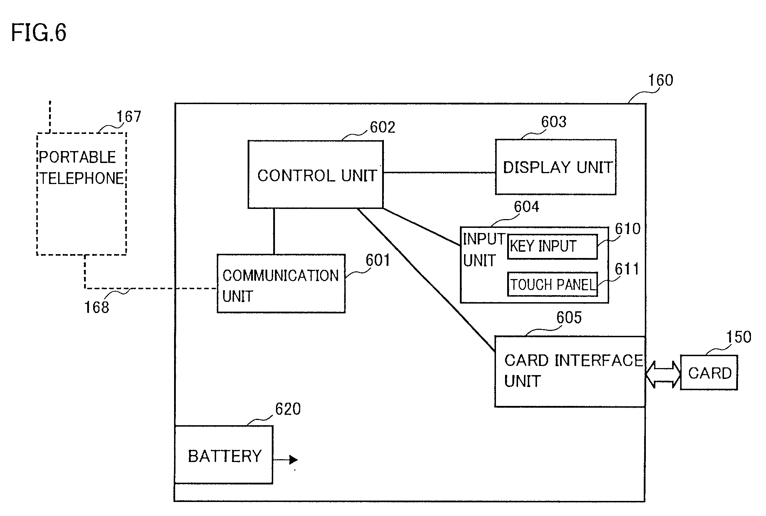

Next, the configuration of portable viewing terminal 160 will be described with reference to Fig. 6.

Portable viewing terminal 160 includes a communication unit 601 controlling data input/output of a portable telephone; a control unit 602 including a CPU, an ROM and an RAM and controlling the overall apparatus; a display unit 603 including an LCD, a back light and a controller for reproducing and displaying a content program; an input unit 604 including a touch panel 611, a key switch 610 or the like; a card interface unit 605 including a card connector to which the card 150 is inserted, a card insertion/removal detecting circuit, an IC controlling reading/writing of information from and to the card and so on; and a battery 620 supplying power. Portable viewing terminal 160 is capable of performing data communication when connected by a communication cable 168 to a portable telephone 167. Thus, portable telephone 167 can access to a home page through the Internet 165 shown in Fig. 1.

The rental introduction home page server 166 shown in Fig. 1 is implemented by an Internet server that can store/transmit a common home page information, and it can display and supply recommendation information/rental list and the like transmitted from the electronic content programs distributing and returning center server 101.

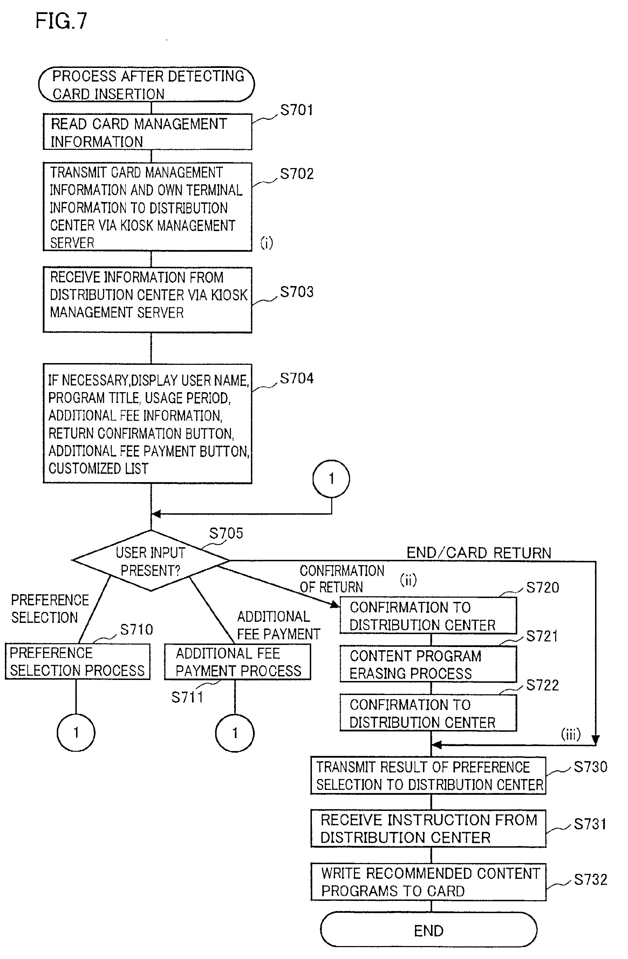

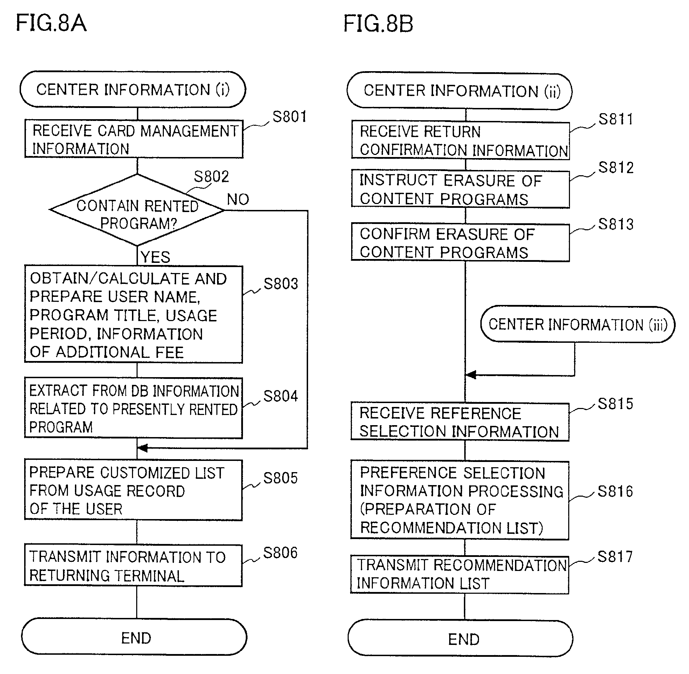

An operation when a content program is returned at a kiosk returning terminal 110 will be described with reference to Figs. 7 and 8. When card interface unit 205 detects insertion of the card 150 by a user, control unit 202 of kiosk returning terminal 110 performs "process after detecting card insertion".

First, in step S701, a card ID and management information in card 150 are read. Card management information stores a title, a rental due date and the like. In S702, the card management information and information of the terminal itself (ID information of kiosk returning terminal 110 and the like) are transmitted to electronic content programs distributing and returning center server 101 via low speed communication network 140 and kiosk management server 170.

At this time, kiosk management server 170 performs an operation of relaying the data, and records the fact that kiosk returning terminal 110 is used. Based on the record, an owner of the kiosk management server 170 and/or kiosk returning terminal 110 charges/pays the amount in accordance with the frequency of use to the owner of electronic content programs distributing and returning center server 101.

When arrival of the data from kiosk returning terminal 110 through low speed communication network 140 and kiosk management server 170 is recognized, electronic content programs distributing and returning center server 101 executes the operation of "center information (i)" of Fig. 8A. In S801, information from kiosk returning terminal 110 is received. Based on this information, in S802, whether the card 150 is in a state of renting a content program or not is determined. When it is in the rental state, user name, rental title and the like are obtained from a data base, and usage time period (number of dates) and additional fee are calculated in S803. In S804, recommendation information (candidates for next rental and the like) related to the title which is being rented is extracted. In S805, a customized list is taken out, from preference ID data prepared based on the use history record of the user, from management data recording apparatus 408. In S806, the data thus prepared is transmitted through kiosk management server 170 to kiosk returning terminal 110.

Returning to Fig. 7, kiosk returning terminal 110 that has received in S703 the information transmitted in S806 displays the data on display unit 203 in S704. At this time, input menus as necessary are prepared. For example, if the rental period is not yet expired, a return confirmation button is displayed to be ready for touch panel input, and when the rental period has already been expired, a button for additional fee payment is displayed. In S705, a user input is received, and whether it is a selection from the customized list, payment of additional fee, confirmation of return end/return of the card is determined. When it is a selection from the customized list, the reference selection is stored in S710, and when they are hierarchical lists, the lists are displayed, and the process waits for an input. When payment of additional fee is selected in S705, an additional fee payment process takes place in S711. This is performed by credit card payment at the electronic content programs distributing and returning center server 101 or credit card payment at the kiosk management server 170 and, thereafter, when payment of the additional fee is finished as a result of the payment processing, return confirmation is possible. Here again, the kiosk management server 170 records the payment finished state, as the data for adjusting use fees between the owners.

When return confirmation is selected in S705, the flow proceeds to S720. In the electronic content programs distributing and returning center server 101, the flow of "center information (ii)" of Fig. 8B is performed. When kiosk returning terminal 110 confirms whether content programs erasing process may be executed or not to electronic content programs distributing and returning center server 101 (via kiosk management server) in S720, electronic content programs distributing and returning center server 101 receives return confirmation information in S811. When return condition is satisfied, the center server instructs erasure of the content program in S812. In response, kiosk returning terminal 110 performs content program erasing process in S721. Content program erasure refers to overwriting of card management information so as to make it impossible to read the content program, and not the content program itself is erased, as described above. When kiosk returning terminal 110 generates a signal confirming erasure in S722, the erasure confirmation is performed in S813. Thereafter, in S730, the result of reference selection by the user is transmitted to electronic content programs distributing and returning center server 101, which is received in S815. In S816, a recommendation list is prepared in accordance with the preference selection information, and the recommendation list is transmitted to kiosk returning terminal 110 in S810. In S731, kiosk returning terminal 110 receives an instruction of the recommendation list, and in S732, contents stored in trailer data storing apparatus 206 or data transmitted with the list are written to the card 150 in accordance with the instructed list. In this manner, recommendation information is written, that is, overwritten at least partially over the returned (erased) content program. Therefore, the returned content program becomes incomplete, even if it could be taken out. When end/card return is selected in S705, the processes from S730 and S815 and the following are executed, recommendation information is additionally written and thereafter, kiosk returning terminal 110 ejects the card 150.

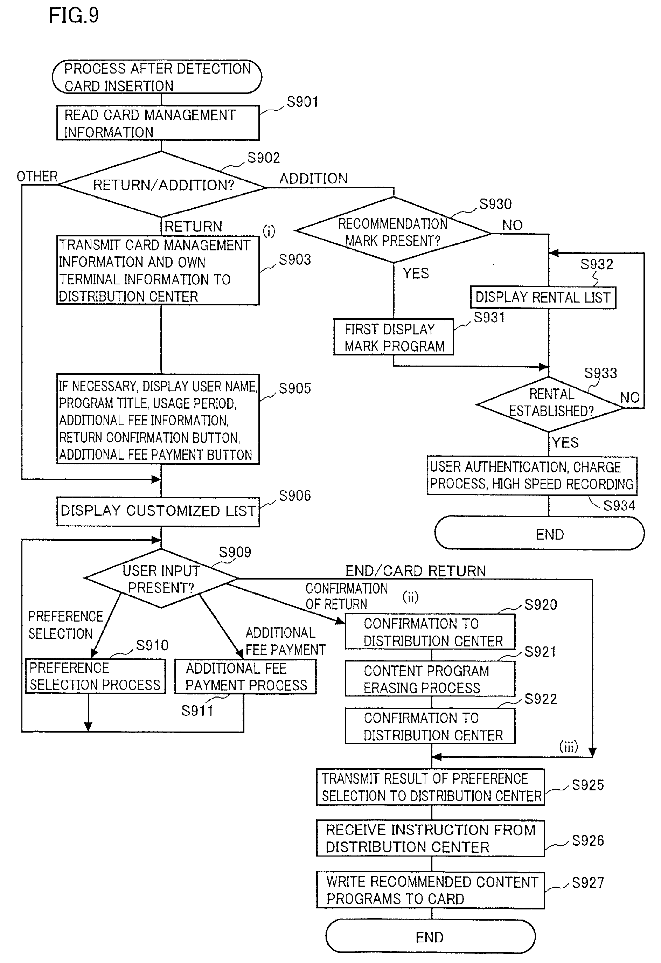

The operation of high speed recording apparatus 120 for rental will be described with reference to Fig. 9.

When card interface unit 305 detects insertion of the card 150 by a user, control unit 302 of rental high speed recording apparatus 120 executes "process after detecting card insertion" of Fig. 9.

In S901, card ID and management information in card 150 are read. The card management information stores a title, rental due date and the like. In S902, whether the user wishes an additional rental, returning or others is asked, and an operation is selected in accordance with the user input. When returning is selected, the operation following S903 is executed. The operation is the same as that of step S702 and the following of kiosk returning terminal 110 shown in Fig. 7, and therefore, description thereof is not repeated. When the selection is not the returning, the customized list prepared by the electronic content programs distributing and returning center server 101 is displayed in S906, and thereafter, user input and response thereto take place, as described with reference to the kiosk returning terminal 110. When additional rental is selected in S902, the flow proceeds to S903, in which whether a recommendation mark (described later) has been stored or not is determined. If it is stored, a rental list of the marked titles is displayed first, and thereafter, the flow proceeds to S933. If no mark is stored, a common rental list is displayed in S932 and the flow proceeds to S933. In S933, whether a title to be rented is determined by a user input or not is confirmed, and if not, the rental list is displayed and the flow waits for determination. Though not shown, when it is determined that additional rental is canceled is S933, the process terminates. When the title to be rented is determined, card information is transmitted to electronic content programs distributing and returning center server 101 in S934, user authentication is performed, payment of rental fee takes place and, thereafter, through large capacity communication unit 301, data is read and recorded on the card 150 from the electronic content programs distributing and returning center server 101, or if the content program has been already stored in the data large capacity storing apparatus of the high speed recording apparatus 120 of the rental store, from the large capacity storing apparatus. Thereafter, management information of card 150 is updated and the process terminates.

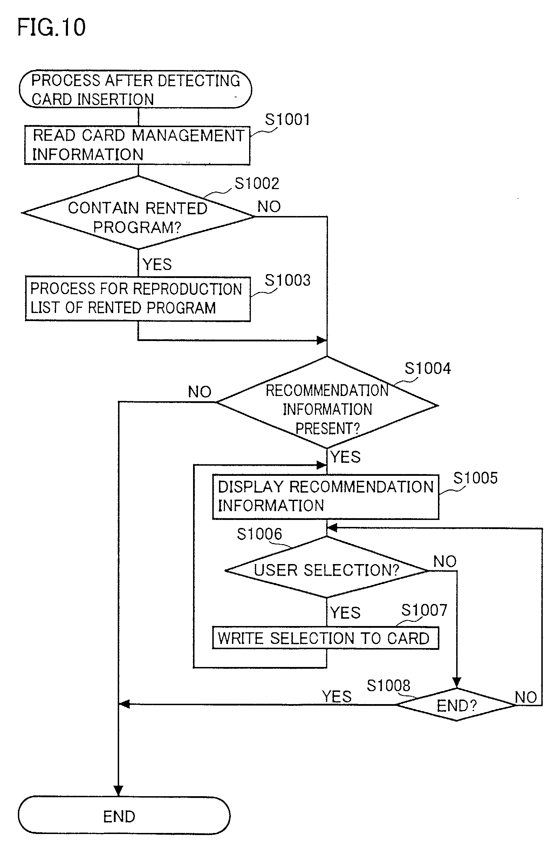

An operation of the portable viewing terminal 160 will be described with reference to Fig. 10.

When insertion of the card 150 by a user is detected by card interface unit 605, control unit 602 of portable viewing terminal 160 executes the operation of "process after detecting card insertion" of Fig. 10.

First, in S1001, card ID and management information in card 150 are read. The card management information stores a title, a rental due date and the like. Thereafter, in S1002, whether there is a rented content program or not is determined and when there is a content program, a reproduction menu of rented titles is displayed, and in accordance with user's selection, the process of reproduction and the like are executed. Thereafter, the flow proceeds to S1004 to reproduce the recommendation information. When there is no rented content program in S1002, the flow directly proceeds to S 1004. In S 1004, whether the recommendation information is stored or not is searched and if not, the process terminates and the flow returns to the common operation. When there is the recommendation information, the recommendation information is displayed in S1005, and in S1006, the user checks which of the recommended programs is to be selected. When selection is made from the information of recommended content programs by the user, the selection is written to the card 150 in S1007 (mark), and the flow returns to S1005. Until the user makes a selection, the flow proceeds to S1008 in which whether the user selected "end" or not is checked. If the user does not yet select "end", the flow returns to S1006. When "end" is selected, the process terminates.

As described above, when the user views the information of recommended content programs written at the time of returning, for example, on the portable viewing terminal 160 and marks his/her selection, a rental list of marked content programs is displayed when the user inserts the card 150 to the high speed recording apparatus 120 of a rental store, as described above. Therefore, it is possible for the user to quickly rent the desired program at the high speed recording apparatus 120 at a rental store.

Further, it is possible to connect portable viewing terminal 160 to the rental introduction home page server 166 through the Internet 165 using communication unit 601 and a portable telephone 167. At this time, when the desired object of rental is selected and information thereof is downloaded from the viewed home page to the card 150, data is written in the same format as used for designating the title for next rental described above, and therefore, the object of rental can be marked in the similar manner as described above.

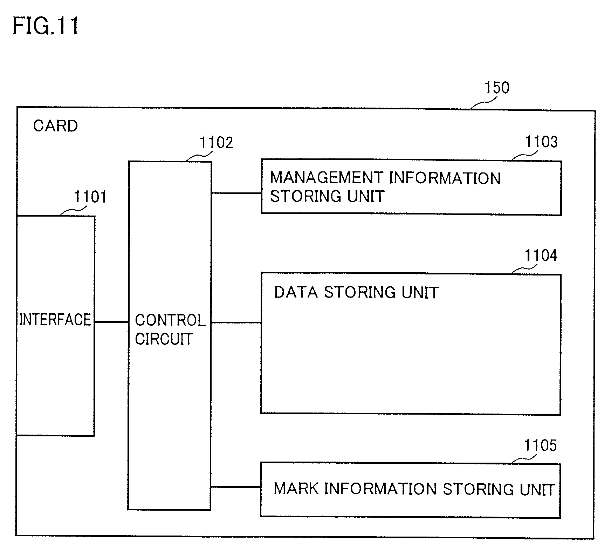

Referring to Fig. 11, the configuration of card 150 will be described. The card 150 includes an interface unit 1101 consisting of a connector which is inserted to portable viewing terminal 160, kiosk returning terminal 110, rental high speed recording apparatus 120 or the like to establish coupling for information exchange; a control circuit 1102 executing data write/read, equipment authentication and the like; management information storing unit 1103 recording rental management information; data storing unit 1104 recording content programs data; and a mark information storing unit 1105 storing mark information. A part of data storing unit 1104 may be used as the mark information storing unit 1105.

The management information storing unit 1103 includes a portion that can be read from the outside of card 150, and a portion used only by the internal control circuit for authentication, and it is used for ensuring card data security.

More specifically, management information storing unit 1103 stores a secret key (that cannot be read from the outside) used for authentication, a contents key (read only) encrypting electronic content program data encrypted by the secret key, and management information (file name, title, due date, a reproduction key, storage location of content program data and the like). Data storing unit 1104 is a writable and readable area, in which the electronic content program data are encrypted by the reproduction key and recorded. Encryption is performed by using DES (Data Encryption Standard). The file name represents the name of the file storing the electronic content program data, the title represents what is the electronic content program, and the due date represents rental due date of the electronic content program. The reproduction key is used for deciphering, when the content program is read.

When content programs are written, the file name, title, due date and reproduction key are recorded program by program. For recording, equipment authentication is performed by using the secret key and the content key in advance, so that it is proved that the writing equipment is reliable.

The content program in the card 150 is "returned" by first confirming, through authentication, that the returning equipment is a reliable, and by overwriting at least the reproduction key information among the management information (file name, title, due date, reproduction key and the like) for every content program data file, so that deciphering becomes impossible. Thus, at the time of returning, speedy process is possible, without the necessity to overwrite the formidable amount of content data themselves.

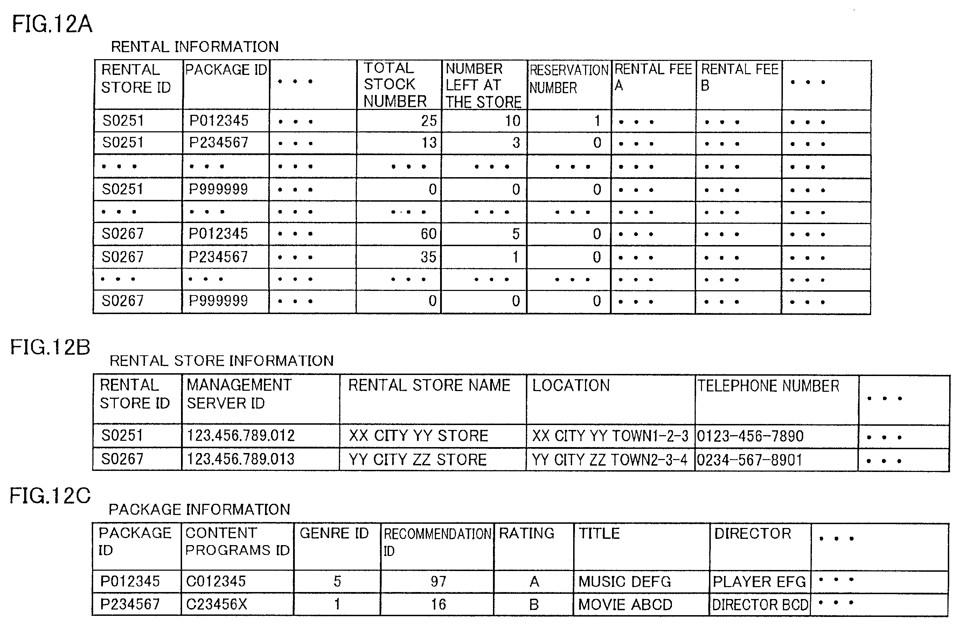

Another operation that is performed at the time of returning the content program will be described with reference to Figs. 12A to 12C, 13 and 14. The data configurations shown in Figs. 12A to 12C, 13 and 14 are stored in management data storing apparatus 408 of electronic content programs distributing and returning center server 101. Center server 101 can also be connected to a management server at a package media rental store not shown in Fig. 1, and the center server obtains rental information data of the store, and stores the data as rental information of Fig. 12A. The rental store is specified by the rental store information of Fig. 12B, which information includes rental store ID uniquely identifying the rental store, an ID of a management server managing the rental store, rental store name, location of the store, telephone number and so on. Information related to a package including correlation information between an object rented as a package medium and an object distributed and rented as a content program is stored as the package information of Fig. 12C, which information includes a package ID uniquely identifying the package, content program ID of related content program, a genre ID identifying the genre of the program, a recommendation ID identifying a related recommendation list, a user rating of the program, the title of the program, director of the program and so on.

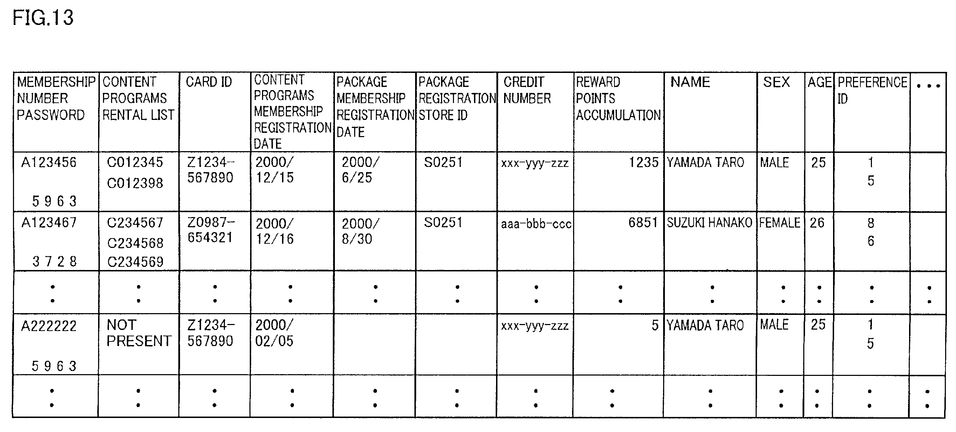

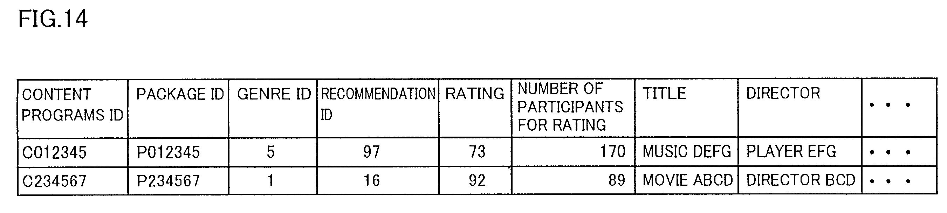

Further, a membership database of the members renting content program information is stored in the form of the user information of Fig. 13, that includes membership number, password, a list of rented content programs, a card ID identifying the card as the recording medium, date of membership registration of content programs distribution, date of membership registration of a package rental store and the registered store ID, credit card number for payment, accumulation value of membership rewards point, user name, sex, age, and preference ID correlated to the recommendation list indicating the preferred field of the user. Information related to content programs including correlation information between an object distributed and rented through content programs and the object rented as a package media is recorded as content programs information of Fig. 14, which includes a uniquely identifying content program ID, IDs of related package media, genre ID, recommendation ID, rating points by the users, number of users participated in the rating, title of the program, director of the program and so on.

When the electronic content program is returned at a kiosk returning terminal 110, the user inserts a card, and from the card ID, membership number and the like, the user is identified. Thus, the electronic content programs distributing and returning center server looks for the user information (Fig. 13) to determine whether the user is a member of the package rental. If the user is a member, it is possible to extract an ID of the package rental registered store, where the user registration date is the latest. By using the rental store ID, rental state of the package media (video tape, DVD or the like) is transmitted/displayed on the kiosk returning terminal 110, based on the stored rental information of Fig. 12A, so that it is possible to check the state of rental at that rental store without the necessity to make direct inquiry to the rental store regularly used by the user. In this state, when a preferred title displayed on kiosk returning terminal 110 is designated, the information is transmitted to electronic content programs distributing and returning server 101 via kiosk management server 170, and the electronic content programs distributing and returning server 101 makes a reservation on the management server of the package media rental store, and thus, it is possible for the user to make reservation of rental through the kiosk returning terminal 110.

At this time, it is possible for the electronic content programs distributing and returning server 101 to know from the information of the return electronic contents program, package ID related thereto, using Fig. 14, and to detect whether the user made a reservation of any related package media for rental. When a related object is reserved, a prescribed value is added to the rewards point accumulation of the user information. Thus, it is possible for the user to exchange a prescribed points for rental fee discount of future rental of electronic content programs.

By selecting "rating" from a list of the portable viewing terminal 160 and inputting a numerical value through key input, it is possible for the user to enter a rating of the rented content program, which is stored in mark information storing unit 1105 of the card 150. At the time of returning the electronic content program at the kiosk returning terminal 110, the rating of the content program recorded on memory card (card 150) is transmitted together with the mark information, to electronic content programs distributing and returning center server 101 through the kiosk returning terminal 110. Upon reception of the information, the electronic content programs distributing and returning center server 101 adds a prescribed value to the reward points accumulation of user information. Thus, it becomes possible for the user to exchange a prescribed points for rental fee discount of future rental of electronic content programs.

Though not shown, instead of the content program ID and the card ID in the content programs rental list of Fig. 13, a file ID that is automatically generated by the electronic content programs distributing and returning center server 101 and uniquely allocated every time an electronic content program is rented may be used, to realize all the series of operations at the time of returning the content program described above.

The file ID is generated and stored by management data storing apparatus 408 of electronic content programs distributing and returning center server 101 based on the membership number ID as a part of the user information shown in Fig. 13 and content program ID as a part of the content programs information shown in Fig. 14 when a user rents a designated electronic content program, and written to the card by the high speed recording apparatus 120 at a rental store. When charging process and payment system are authenticated, the high speed recording apparatus 120 of the rental store writes the content program designated by the user, that is supplied from the electronic content programs distributing and returning center server 101 or already stored in the recording apparatus itself, to the card 150 inserted by the user. At this time, the file ID is simultaneously written to the card 150.

When a member A123456 first rents a content program C01234, the file ID is defined as file ID = C01234001A123456, for example, and uniquely distinguished and managed as a part of the user information shown in Fig. 13 by the electronic content programs distributing and returning center server 101 (when the same member rents the same content program second time, the file ID will be defined as file ID = C01234002A123456). The electronic content programs distributing and returning center server can perform the series of operations when the content program is returned, by specifying the package media rental information shown in Fig. 12A, user information shown in Fig. 13 and content program information shown in Fig. 14, by referring to the file ID.

In the operation of the high speed recording apparatus 120 of the rental store described with reference to Fig. 9, it is described that the card ID and the management information in the card are read in S901. Alternatively, the file ID described above may be used.

In the operation of returning a content program described with reference to Figs. 7 and 8, the card ID and the management information in the card are read in step S701. Alternatively, the file ID may be used.

In the alternative operation when the content program is returned as described with reference to Figs. 12A to 12C, 13 and 14, the card 150 is inserted and the user is specified by the card ID, membership number and the like when the electronic content program is returned by a kiosk returning terminal 110, or the electronic content programs distributing and returning server 101 recognizes related package ID using Fig. 14 from the information of the return electronic content program. Alternatively, the file ID may be used.

Therefore, according to the embodiments above, as the kiosk returning terminal 110 is used for rental completion procedure, it becomes possible for the user to return the content program at a convenient nearest location. For example, when a user travels over a long period of time from a first station to a second station and wishes to view a movie in the train, it is possible for the user to rent a video program at a rental store of the first station, view the movie in the train, and return the rented movie program at a kiosk returning terminal 110 installed in a convenience store, for example, near the second station.

The kiosk returning terminal 110 itself does not rent the electronic content programs, and redistribution of content programs themselves is unnecessary.

Further, it is unnecessary to install a high speed communication path required for high speed recording of electronic content programs such as videos at the kiosk returning terminal 110 in town or store fronts. Therefore, it becomes possible to install kiosk returning terminals 110 using inexpensive, common (low speed) communication networks. This means that the return location comes nearer to and conveniently situated for the user.

Further, it is possible for the content programs provider to charge the rental fee surely in accordance with the usage time period that is convenient for the user, and unauthorized use of the content programs out of the usage time period can be prevented. Thus, it is advantageous both for the users and the content programs providers.

Further, as recommendation data is recorded when the electronic content program is returned and user's preferred program titles are recorded from the Internet home page to the memory card, it is possible for the user to freely browse the information of recommended content programs on the portable viewing terminal 160, mark a recommendation in advance and rent the preferred program at a rental store with highest priority. Therefore, it is possible for the user to rent a program designated in advance to his/her satisfaction, without the necessity of searching through the search list at the high speed recording apparatus 120 at a rental store.

Further effects include that the time for selecting a program at a rental store can be made shorter, and that a preferred program can be rented without fail, to the user's satisfaction.

Further, as the turn over rate increases at the rental store, larger number of programs can be rented out, and hence it is advantageous for the rental stores.

Further, after the end of rental completion procedure, the recommendation information is recorded on the card utilizing an empty area to encourage next rental of content programs. Therefore, it is always possible to provide information on the empty area. Here, as the selections are limited to some extent to be displayed on the kiosk terminal, speedy processing by the user is expected, which leads to improved turn over rate of the kiosk terminal and larger number of processings.

Further, it is possible for the user to mark in advance when he/she has time on the portable viewing terminal that allows viewing of content programs, smartly using the time. When the card is inserted to the high speed recording apparatus at a rental store, the selected content program is displayed with highest priority, and hence it is possible for the user to rent the content program without the necessity of searching program titles. Thus, the user can utilize his/her time effectively, occupation time of the high speed recording apparatus at the rental store can be reduced, and rental procedure is available for a larger number of users.

By confirming the state of rental of the package media and reservation of rental at the time of returning an electronic content program, it is possible for the user to know that he/she can surely rent the preferred program and to visit and rent the package media at a rental store, so that it is unnecessary for the user to make direct inquiry at the store, and the user need not visit the rental store to search for the program.

Therefore, the present invention improves business efficiency of a rental store, and provides synergistic effect of correlation between the electronic content programs rental and the package media rental. As the rental of electronic content programs is promoted, customer turn over rate improves, enabling larger number of rentals, and users' preferences can be better reflected on the assortment of programs, which leads to higher interest.

Further, as the reward points earned in accordance with the number of rentals of package media or the number of transmitting evaluation comments of programs can be exchanged to rental fee discount of electronic content programs, user's satisfaction is improved by the rewards at the time of renting electronic content programs. Therefore, the present invention improves business efficiency of a rental store, and provides synergistic effect of correlation between the electronic content programs rental and the package media rental. As the rental of electronic content programs is promoted, customer turn over rate improves, enabling larger number of rentals, and users' preferences can be better reflected on the assortment of programs, which leads to higher interest.

The reason why the kiosk terminal 110 is utilized for the rental completion procedure is that it is determined by convenience store franchises to install kiosk terminals for network commerce, such franchises have huge number of stores nationwide, which means that it is the most suitable medium available for the user to perform the rental completion procedure. It becomes possible to utilize a conventional kiosk terminal system using low speed communication path as communication media. Thus, a system that covers wide area can be constructed in a short period at a low cost.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A content program distributing and returning system, including: a first terminal (120) executing rental of a content program; a second terminal (110)that can be installed spaced from said first terminal; and a management apparatus (101) connected to said first and second terminals through a network; wherein
said first terminal executes rental of said content program by storing the content program in a prescribed memory (150);
said second terminal executes a process for disabling reading of the content program stored in said prescribed memory; and
said management apparatus determines charge amount for the rental of said content program based on a time period from storage of the content program by said first terminal in said prescribed memory until said second terminal executes the process for disabling reading of the content program in said prescribed memory, and controls said second terminal such that payment is made in accordance with the determined charge amount when the second terminal disables reading of said content program.

2. The content program distributing and returning system according to claim 1, wherein
said second terminal stores information of recommended content programs to the prescribed memory, when executing the process for disabling reading of said stored content program in said prescribed memory.

3. The content program distributing and returning system according to claim 2, wherein
said first terminal displays an image allowing selection of a content program for rental, and stores a content program selected based on the image displayed for selection in said prescribed memory; and
contents of said image allowing selection of a content program for rental is determined based on the information of recommended content programs stored in said prescribed memory.

4. The content program distributing and returning system according to any of claims 1 to 4, wherein
said first terminal stores said content program and a key necessary for reading the content program simultaneously in said prescribed memory; and
said second terminal executes the process for disabling reading of the content program stored in said prescribed memory by destroying said key.

5. The content program distributing and returning system according to any of claims 1 to 4, wherein
said management apparatus transmits a content program to said first terminal; and
said first terminal stores the content program received from said management apparatus in said prescribed memory.

6. The content program distributing and returning system according to any of claims 1 to 5, wherein
said second terminal executes a process for accepting rental reservation from a user, when executing the process for disabling reading of the content program stored in said prescribed memory, and transmits information of the accepted reservation to said management apparatus; and
said management apparatus adds a reward point to said user whose rental reservation is accepted by said second terminal, for the rental reservation.

7. The content program distributing and returning system according to any of claims 1 to 6, wherein
said second terminal accepts input of a rating by a user for the content program of which reading is to be disabled, and transmits the rating to said management apparatus when executing the process for disabling reading of the content program; and
said management apparatus adds a reward point to said user for said input of rating.

8. A content program rental method utilizing a first terminal (120) executing rental of a content program; a second terminal (110)that can be installed space from said first terminal; and a management apparatus (101) connected to said first and second terminals through a network, comprising the steps of:
storing a content program in a prescribed memory (150) by a first terminal to execute rental of the content program;
disabling reading of the content program stored in said prescribed memory by a second terminal that can be installed apart from said first terminal;
determining charge amount of the rental of said content program, by a management apparatus connected to said first and second terminals through a network, based on a period from storage of the content program in said prescribed memory by said first terminal until reading of the content program in said prescribed memory is disabled by said second terminal; and
controlling said second terminal so that payment is made in accordance with said determined charge amount when said second terminal disables reading of said content program.

9. The content program rental method according to claim 8, wherein
in said step of executing the process for disabling reading of said content program stored in said prescribed memory, information of recommended content programs is stored in said prescribed memory.

10. The content program rental method according to claim 9, further comprising the steps of
displaying an image allowing selection of a content program for rental by/on first terminal; and
storing a content program selected based on the image displayed for selection to said prescribed memory, by said first terminal; wherein
contents of the image allowing selection of a content program for rental is determined based on the information of recommended content program stored in said prescribed memory.

11. A program rental system, comprising
a first terminal for renting out a program to a user by storing the program and rental data onto a portable memory device presented to said first terminal;
a second terminal for terminating rental of said program by disabling reading thereof upon presentation of the portable memory in which the rented program has been stored;
the system having rental transaction means for executing a rental transaction in accordance with the rental data read at said second terminal.
